# EUROPEAN PATENT APPLICATION

(11) **EP 4 819 678 A1**
(43) Date of publication of application: **07.10.2026**
(21) Application number: 23959903.8
(22) Date of filing: 30.11.2023
(51) Int. Cl.: H04W 24/10

(54) **INFORMATION TRANSMISSION METHOD, TERMINAL DEVICE, NETWORK DEVICE, AND SERVER**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Mewburn Ellis LLP
(86) International application number: PCT/CN2023/135671
(87) International publication number: WO 2025/111992

(57) **Abstract**

The present application relates to an information transmission method, a terminal device, a network device, a server, a chip, a computer-readable storage medium, a computer program product, a computer program, and a communication system. The method comprises: a terminal device sends first information, wherein the first information comprises first data and second information associated with the first data, the second information is used for indicating first identification information associated with the collection process of the first data, and the first data comprises one or more data collection samples. According to embodiments of the present application, by means of transmission of the second information, data classification is performed for different data collection processes, so that adaptive models under different classifications can be obtained by training, thereby improving the performance of corresponding models under specific conditions.

## Description

### TECHNICAL FIELD

The present application relates to the field of communications, and in particular, to a method for information transmission, a terminal device, a network device, a server, a chip, a computer-readable storage medium, a computer program product, a computer program and a communication system.

### BACKGROUND

At present, AI-based solutions are increasingly being applied in wireless communication systems, where the deployment of models on the terminal device side has garnered growing attention. In order to train models deployed on the terminal device side, a large amount of terminal device-side data is required to be collected. How to collect data for training terminal device-side models is an important research direction.

### SUMMARY

Embodiments of the present application provide a method for information transmission, a terminal device, a network device, a server, a chip, a computer-readable storage medium, a computer program product, a computer program and a communication system.

The embodiments of the present application provide a method for information transmission, which includes:
transmitting, by a terminal device, first information; where the first information includes first data and second information associated with the first data, and the second information is used for indicating first identification information associated with a collection process of the first data, the first data including one or more data collection samples.

The embodiments of the present application provide a method for information transmission, which includes:
receiving, by a network device, first information transmitted by a terminal device; where the first information includes first data and second information associated with the first data, and the second information is used for indicating first identification information associated with a collection process of the first data, the first data including one or more data collection samples.

The embodiments of the present application provide a method for information transmission, which includes:
receiving, by a server, first information; where the first information is collected by a terminal device, or is collected and subsequently associated with third information and/or subjected to information desensitization processing; where the first information includes first data and second information associated with the first data, the second information is used for indicating first identification information associated with a collection process of the first data, and the first data includes one or more data collection samples.

The embodiments of the present application provide a terminal device, which includes:
a first communication module, configured to transmit first information; where the first information includes first data and second information associated with the first data, and the second information is used for indicating first identification information associated with a collection process of the first data, the first data including one or more data collection samples.

The embodiments of the present application provide a network device, which includes:
a second communication module, configured to receive first information transmitted by a terminal device; where the first information includes first data and second information associated with the first data, and the second information is used for indicating first identification information associated with a collection process of the first data, the first data including one or more data collection samples.

The embodiments of the present application provide a server, which includes:
a third communication module, configured to receive first information; where the first information is collected by a terminal device, or is collected and subsequently associated with third information and/or subjected to information desensitization processing; where the first information includes first data and second information associated with the first data, the second information is used for indicating first identification information associated with a collection process of the first data, and the first data includes one or more data collection samples.

The embodiments of the present application provide a terminal device, which includes a transceiver, a processor and a memory. The memory is configured to store a computer program, the transceiver is configured to communicate with other devices, and the processor is configured to invoke the computer program stored in the memory and execute the computer program, to enable the terminal device to perform the method for information transmission above.

The embodiments of the present application provide a network device, which includes a transceiver, a processor and a memory. The memory is configured to store a computer program, the transceiver is configured to communicate with other devices, and the processor is configured to invoke the computer program stored in the memory and execute the computer program, to enable the network device to perform the method for information transmission above.

The embodiments of the present application provide a server, which includes a transceiver, a processor and a memory. The memory is configured to store a computer program, the transceiver is configured to communicate with other devices, and the processor is configured to invoke the computer program stored in the memory and execute the computer program, to enable the server to perform the method for information transmission above.

The embodiments of the present application provide a chip for implementing the method for information transmission above.

Specifically, the chip includes a processor, configured to invoke a computer program from a memory and execute the computer program, to enable a device equipped with the chip to perform the method for information transmission above.

The embodiments of the present application provide a computer-readable storage medium for storing a computer program which, when executed by a device, enables the device to perform the method for information transmission above.

The embodiments of the present application provide a computer program product including computer program instructions, and the computer program instructions enable a computer to perform the method for information transmission above.

The embodiments of the present application provide a computer program which, when executed on a computer, enables the computer to perform the method for information transmission above.

In the embodiments of the present application, the first information is reported by the terminal device, where the first information includes the first data and the second information, and the second information is used for indicating the first identification information associated with the collection process of the first data, so as to achieve data classification for different data collection processes through the transmission of the second information, which facilitates training of models adapted to different classifications and enhances model performance.

### BRIEF DESCRIPTION OF THE DRAWINGS

FIG. 1 is a schematic diagram of an application scenario according to an embodiment of the present application.
FIG. 2 is a schematic flowchart of a method for information transmission according to an embodiment of the present application.
FIG. 3 is a schematic flowchart of a method for information transmission according to another embodiment of the present application.
FIG. 4 is a schematic flowchart of a method for information transmission according to yet another embodiment of the present application.
FIG. 5 is an interaction flowchart of a method for information transmission according to an embodiment of the present application.
FIG. 6 is a schematic block diagram of a terminal device according to an embodiment of the present application.
FIG. 7 is a schematic block diagram of a network device according to an embodiment of the present application.
FIG. 8 is a schematic block diagram of a network device according to another embodiment of the present application.
FIG. 9 is a schematic block diagram of a server according to the embodiments of the present application.
FIG. 10 is a schematic block diagram of a communication device according to an embodiment of the present application.
FIG. 11 is a schematic block diagram of a chip according to an embodiment of the present application.
FIG. 12 is a schematic block diagram of a communication system according to an embodiment of the present application.

### DETAILED DESCRIPTION

Technical solutions in the embodiments of the present application will be described below in conjunction with accompanying drawings in the embodiments of the present application.

The technical solutions in the embodiments of the present application may be applied to various communication systems, such as: a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-Generation (5G) communication system, a 6th-Generation (6G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In the embodiments of the present application, the network device may be a device used for communicating with a mobile device. The network device may be an access point (AP) in WLAN, a relay station or an access point, an in-vehicle device, a wearable device, a network device (gNB) in an NR network, or a network device in a future evolved PLMN network, or a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a metro cell, a micro cell, a pico cell, a femto cell, or the like. These small cells have characteristics of small coverage range and low transmit power, which are applicable for providing a data transmission service with a high rate.

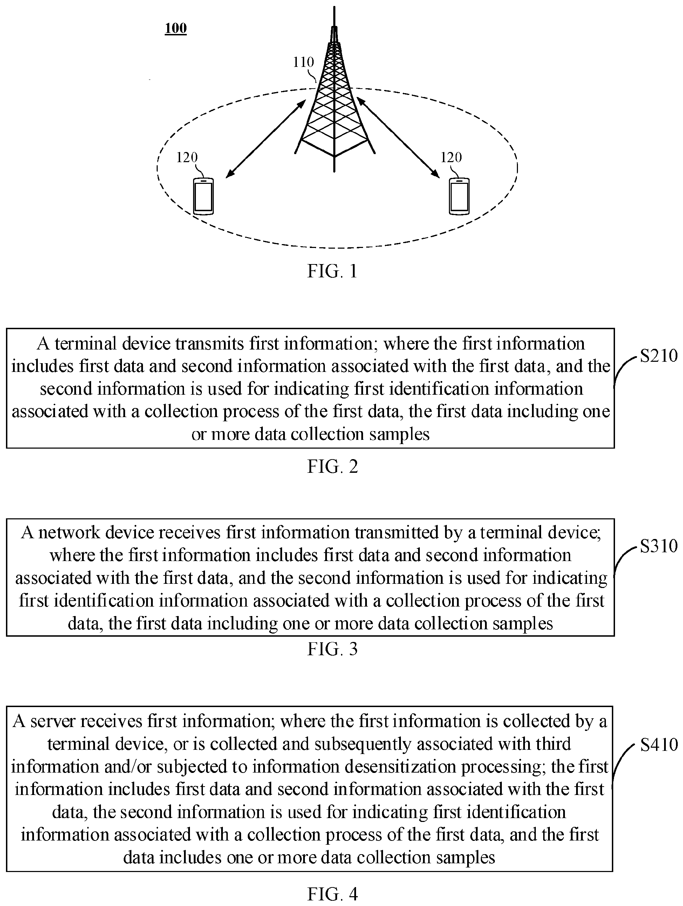

FIG. 1 exemplarily illustrates a communication system 100. The communication system includes one network device 110 and two terminal devices 120. In an implementation, the communication system 100 may include multiple network devices 110, and the coverage range of each network device 110 may include other numbers of terminal devices 120, which is not limited in the embodiments of the present application.

It should be understood that in the embodiments of the present application, a device having a communication function in a network/system may be referred to as a communication device. In an example of the communication system illustrated in FIG. 1, the communication device may include a network device and a terminal device, which have the communication function. The network device and the terminal device may be specific devices in the embodiments of the present application, which will not be repeated here. The communication devices may further include other devices in the communication system, such as a network controller, a mobile management entity or other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that related objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence relationship between the two, or may mean that there is an associated relationship between the two, or may mean a relationship of indicating and being indicated, a relationship of configuring and being configured, or the like.

In the present application, the meanings of various terms such as server, server entity, server node, data collection server, data collection server entity, data collection server node, data collection entity and data collection node are not distinguished. Optionally, the data collection server may further perform artificial intelligence (AI)/machine learning (ML) model training.

FIG. 2 is a schematic flowchart of a method for information transmission according to an embodiment of the present application. Optionally, the method may be applied to the system illustrated in FIG. 1, but is not limited thereto. The method includes at least part of the following content.

In S210: a terminal device transmits first information; where the first information includes first data and second information associated with the first data, and the second information is used for indicating first identification information associated with a collection process of the first data, the first data including one or more data collection samples.

In the embodiments of the present application, the terminal device may transmit the first information to a network device, or may transmit the first information to a server.

Optionally, the network device may be an access network device, a core network device, an information management device or an operation administration and maintenance (OAM) device related to an AI/ML model.

For example, the access network device is any one of: a gNB, a centralized unit (CU), a distributed unit (DU), a centralized unit-control plane (CU-CP), or a centralized unit-user plane (CU-UP).

For example, the core network device is any one of: a location management function (LMF) network element, a network slice selection function (NSSF), an authentication server function (AUSF), a unified data management (UDM), an access and mobility management function (AMF), a session management function (SMF), a policy control function (PCF), a user plane function (UPF), a sensing function (SF), or a network data analytics function (NWDAF) network element. The NWDAF network element is mainly used for function optimization analysis.

For example, the OAM device may include self-organizing networks (SON) and/or minimization of drive tests (MDT) functions, which are mainly used for data collection related to function optimization. Alternatively, the OAM device may include a management data analytics (MDA) function, which is mainly used for function optimization analysis.

Optionally, the server may be deployed within a network device or outside a network device. For example, the server may be an over the top (OTT) server.

In the embodiments of the present application, the first information may be used for training a model. Optionally, the model may be deployed in a terminal device. The model may be an AI model or an ML model.

In the embodiments of the present application, the first information includes the first data, and the first data includes one or more data collection samples. The data collection sample may be a single sample in model training data, and may include measurement information, sensor information or other related auxiliary information for input into a model, and may also include label data.

In the embodiments of the present application, the first information further includes the second information associated with the first data, and the second information is used for indicating the first identification information associated with the collection process of the first data. That is, when reporting the first data, the terminal device indicates or reports the first identification information associated with the collection process of the first data at the same time. In this way, the data receiving end is able to determine the first identification information associated with the collection process of the first data, and perform operations such as data classification, data filtering or data screening on each data collection sample according to the first identification information.

The first identification information may be used for identifying (or representing) information related to the terminal device during the collection process of the first data, for example, the information related to the terminal device includes terminal device configuration/terminal device state information and so on, so as to realize differentiation of terminal device data collected under different terminal device configuration/state backgrounds, which facilitates training of models adapted to different terminal device configurations/states, thereby enhancing the operating performance of the model in specific scenarios.

Optionally, in the embodiments of the present application, the first identification information may be an identifier in the form of a character string or a numerical value, used for representing the information related to the terminal device during the collection process of the first data. In this way, the first information may not include explicit data collection background information, such as, terminal device configuration/terminal device state information during data collection, which avoids direct leakage of private information of the terminal device over the air interface, protects the privacy of the terminal device, meets user data regulatory requirements, and complies with the principle of not disclosing confidential data.

In some embodiments, the first identification information is associated with one or more of the following types of information A to C.

Information A: a configuration used by the terminal device when collecting the first data.

Optionally, the configuration may include a hardware configuration and/or a software configuration. For example, the hardware configuration may include one or more of: an antenna module configuration, a modem module configuration, a power amplification module configuration, or a camera module configuration.

Information B: an operating state of the terminal device when collecting the first data.

Optionally, the operating state may include a state in one or more of the following aspects:
out-of-service, out-of-signal-coverage, power-saving, overheating, multi-card operating simultaneously, speed, resource-constrained, or interfered by other technologies.

Specifically, the operating state of the terminal device may include one or more types of state information, such as whether the terminal device is in an out-of-service state, whether the terminal device is in an out-of-signal-coverage state, whether the terminal device is in a power-saving state, whether the terminal device is in an overheating state, or whether the terminal device is in a multi card operating simultaneously state, a speed of the terminal device, whether the terminal device is in a resource-constrained state, or whether the terminal device is interfered by other technologies. Optionally, multi card operating simultaneously may refer to a multi universal subscriber identity module (USIM) card operating state.

Information C: a precision of the first data collected by the terminal device.

Here, the precision may also refer to a precision level, a precision interval or a precision level interval, which is not distinguished in the present application.

Specifically, during the data collection process, the terminal device may determine to process the data collection sample into information of a specific precision. For example, the terminal device quantizes the collected data, and the precision of the first data collected by the terminal device may include the precision of the quantization performed by the terminal device on the collected data. For example, in practical applications, a value range of the collected data is an interval [a, b], since the interval [a, b] includes an infinite number of numerical values, the numerical interval [a, b] is required to be quantized before reporting, that is, the numerical interval [a, b] is divided into a finite number of numerical sub-intervals, with each numerical sub-interval being associated with a specific numerical value, then the numerical value may be used to represent data within the associated numerical sub-interval. Generally speaking, the finer (i.e., the more) the divided numerical sub-intervals, the higher the quantization precision and the greater the transmission overhead (as more numerical values are required to represent more numerical sub-intervals, i.e., more bits are required); and accordingly, the fewer the divided numerical sub-intervals, the lower the quantization precision and the smaller the transmission overhead.

For example, when the first identification information is associated with the precision of the first data (i.e., information C), the first identification information may correspond to the following two implementations.

Implementation I: the first data reported by the terminal device is non-truncated data, and the precision information of the first data is additionally indicated by the first identification information. Each value of the first identification information indicates a precision deviation value or a precision deviation value interval of the first data. An actual value of the first data associated with the value of the first identification information is equal to a sum of the reported value of the first data and the precision deviation value of the first data indicated by the value of the first identification information, or an actual value interval of the first data associated with the value of the first identification information is equal to a sum of the reported value of the first data and the precision deviation value interval of the first data indicated by the value of the first identification information.

Implementation II: the first data reported by the terminal device is truncated data (referred to as truncated data A), and remaining truncated data of the first data (referred to as truncated data B) is additionally indicated by the first identification information. Truncated data A is a high-bit truncation of the complete first data or a low-bit truncation of the complete first data, and accordingly, truncated data B is a low-bit truncation of the complete first data or a high-bit truncation of the complete first data; and the combination of the two may obtain the actual value or value interval of the first data. For example, a complete piece of first data (or a data collection sample) includes 24 bits of information, where truncated data A reported by the terminal device includes the high 16 bits of the 24 bits of information, and the low 8 bits of information are indicated by a value of the first identification information. For example, the first identification information occupies 8 bits of information, each value of the first identification information is mapped to a piece of truncated data B containing 8 bits of information (the value of truncated data B is not necessarily the same as the value of the associated first identification information, depending on the actual mapping rule), and the mapping relationship between the two is maintained by the data processing party (e.g., a data collection server). The complete first data (i.e., containing both the information of truncated data A and truncated data B) may be recovered through the reported first data (i.e., truncated data A), the first identification information associated with the first data and the association relationship between the first identification information and the value of truncated data B maintained by the data processing party. Certainly, in the above example, the first identification information may also occupy fewer than 8 bits. In this case, each value of the first identification information is mapped to a value interval of truncated data B. Then, the value interval of the complete first data (any value within the value interval of the complete first data includes both the information of truncated data A and truncated data B) may be obtained through the reported first data (i.e., truncated data A), the first identification information associated with the first data, and the association relationship between the first identification information and the value interval of truncated data B maintained by the data processing party.

By reporting the first identification information, direct reporting of sensitive information of the terminal device is avoided, which indirectly accomplishes data collection while protecting user data privacy and product implementation privacy to a certain extent.

It should be noted that in practical applications, the first identification information may be associated only with the configuration used by the terminal device when collecting the first data, or the operating state of the terminal device when collecting the first data, or the precision of the first data. Alternatively, the first identification information is associated with the configuration used by the terminal device and the operating state of the terminal device when collecting the first data. Alternatively, the first identification information is associated with the configuration used by the terminal device when collecting the first data and the precision of the first data. Alternatively, the first identification information is associated with the operating state of the terminal device when collecting the first data and the precision of the first data. Alternatively, the first identification information is associated with the configuration used by the terminal device and the operating state of the terminal device when collecting the first data, as well as the precision of the first data.

For example, one piece of first identification information may include an identifier associated with a configuration of the terminal device. For example, the first identification information may be a character string "00" associated with configuration 1, or a character string "01" associated with configuration 2, and so on.

Alternatively, one piece of first identification information may include an identifier associated with a combination of a configuration and an operating state of the terminal device. For example, the first identification information may be a character string "00" associated with configuration 1 and state A, a character string "01" associated with configuration 1 and state B, a character string "10" associated with configuration 2 and state A, or a character string "11" associated with configuration 2 and state B. When the first identification information is associated with the combination of a configuration and an operating state of the terminal device, in another implementation, the first identification information is divided into two information fields (denoted as field 1 and field 2, respectively), where field 1 is associated with the configuration of the terminal device, and field 2 is associated with the operating state of the terminal device. The segmentation rule for the information fields (the association relationship between the fields and the terminal device configuration as well as the terminal device state) may be maintained by a data processing party (e.g., a data collection server). Compared with the indication manner via the non-segmented first identification information, the segmented manner for the first identification information may implement a more flexible information association mode (each field indicates independent associated information, respectively). Certainly, when the first identification information is associated with any two types of information A, information B and information C, or when the first identification information is associated with all three types of information A, information B and information C simultaneously, the two implementations for the first identification information described above (i.e., the first identification information having information segmentation and the first identification information not having information segmentation) may both exist. In practical applications, the mapping relationship between the first identification information and its associated information may be configured based on protocol agreements, system agreements, terminal requirements, scenario requirements or the like, which is not limited in the present application.

Through the above transmission of the information, a data collection node on the terminal device side (e.g., an OTT server belonging to the terminal device) can locally maintain the association relationship between the first identification information and the configuration and/or the operating state of the terminal device and/or the data precision; after obtaining the data collection samples reported by the terminal device and the first identification information associated with the data collection samples, the data collection node on the terminal device side can learn under which configuration and/or operating state of the terminal device and/or precision these collected data collection samples were collected; and thus, the operations such as screening and classifying are performed on the collected data, so as to train an AI/ML model suitable for the specific condition for the specific configuration and/or operating state of the terminal device and/or precision.

In some embodiments, each data collection sample included in the first data includes one or more of the following types of information.

First type of information: first measurement information obtained by the terminal device by measuring a reference signal transmitted by a network device.

For example, the reference signal transmitted by the network device may include one or more of: a synchronization reference signal, a channel state information-reference signal (CSI-RS), a demodulation reference signal, a positioning reference signal (PRS), or a sensing sounding reference signal.

In the embodiments of the present application, the measurement information may be understood as a measurement result, and may also be referred to as measurement data.

For example, the first measurement information may include one or more of: reference signal received power (RSRP), reference signal received quality (RSRQ), signal interference noise ratio (SINR), time of arrival (TOA), time difference of arrival (TDOA), received signal strength (RSS), angle of arrival (AOA), or a reference signal beam (or direction) identifier.

Optionally, the first measurement information is a measurement result without filtering. Alternatively, the first measurement information is a filtered measurement result, where filtering includes one or more of Layer 1 filtering, Layer 3 filtering, or application layer filtering.

Second type of information: cell identity information associated with the first measurement information.

Optionally, the cell identity information associated with the first measurement information may be cell identity information of a relevant cell when the terminal device measures the reference signal transmitted by the network device.

For example, the cell identity information is expressed in any one of the following ways:
a cell global identifier (CGI);
a combination of a physical cell ID (PCI) and a frequency point identifier; or
a serving cell index.

Third type of information: second measurement information obtained by the terminal device by measuring a reflected signal of a reference signal transmitted by the terminal device.

For example, the reference signal transmitted by the terminal device include one or more of: a synchronization reference signal, a channel state information-reference signal, a demodulation reference signal, a positioning reference signal, or a sensing sounding reference signal.

For example, the second measurement information may include one or more of: RSRP, RSRQ, SINR, TOA, TDOA, RSS, AOA, or a reference signal beam (or direction) identifier.

Optionally, the second measurement information is a measurement result without filtering. Alternatively, the second measurement information is a filtered measurement result, where filtering includes one or more of Layer 1 filtering, Layer 3 filtering, or application layer filtering.

Fourth type of information: sensor information collected by the terminal device.

In some embodiments, the sensor information includes one or more of:
movement direction information; movement speed information; atmospheric pressure information; air temperature information; device temperature information; humidity information; gravity (acceleration) information; or remaining battery level information.

Fifth type of information: information related to a state of the terminal device and recorded by the terminal device.

For example, the information related to the state of the terminal device includes one or more of:
first indication information, used for indicating whether the terminal device is in an out-of-service state or an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; or
sixth indication information, used for indicating whether the terminal device is in a multi USIM card operating state.

Optionally, the power-saving state reason information is used for indicating a reason why the terminal device is in the power-saving state. For example, the reason why the terminal device is in the power-saving state may include one or more of: device overheating, low device remaining battery level, or the user manually setting the device to enter the power-saving mode.

Optionally, the interference source information is used for indicating an interference source for the interfered state of the terminal device. For example, the interference source may include: communication of other USIM cards within a WLAN communication system, a Bluetooth communication system, a satellite communication system, a WiFi communication system or the terminal device.

Optionally, the resource-constrained reason information is used for indicating the reason why the terminal device is in the resource-constrained state. For example, the reason why the terminal device is in the resource-constrained state may include the device being in the multi USIM card operating state and/or untimely resource scheduling by the network device.

It should be noted that the information related to the state of the terminal device may include only one type of above information or a combination of multiple types of the above information. In practical applications, the information related to the state of the terminal device may be configured based on protocol agreements, system agreements, terminal requirements, scenario requirements or the like, which is not exhaustively listed here.

Optionally, the type of information included in the information related to the state of the terminal device in the first data may also be related to the type of information associated with the first identification information. Specifically, there is a difference between the type of information included in the information related to the state of the terminal device in the first data and the type of information associated with the first identification information. For example, when the first data includes one or more types of the information related to the state of the terminal device, the information associated with the first identification information includes the configuration of the terminal device and/or the precision of the first data, but does not include the operating state of the terminal device when collecting the first data. For another example, when the information related to the state of the terminal device in the first data includes the first indication information and the second indication information (indicating whether the terminal device is in the out-of-service state or the device overheating state), the information associated with the first identification information may include the operating state of the terminal device when collecting the first data, and the operating state may include whether the terminal device is in the power-saving state, the interfered state or the resource-constrained state.

Sixth type of information: time-related information associated with the data collection sample.

For example, the time-related information may include absolute timestamp information or relative timestamp information for collecting the data collection sample.

In an implementation, the relative timestamp information associated with each data collection sample (referred to as sample N1) is equal to a difference between an absolute moment for collecting sample N1 and an absolute moment for collecting sample (N1-1). In this way, a value of the relative timestamp information associated with each data collection sample may be the same as or different from values of the relative timestamp information associated with other data collection samples.

In another implementation, the relative timestamp information associated with each data collection sample is expressed through a numerical index. For example, assuming that a start time or reference time for data collection is moment T (where T is an absolute time), and it is agreed that a new data collection sample is recorded every t milliseconds (ms). The relative timestamp information associated with the 1st data collection sample is expressed by a numerical index value of 0, and then, it may be calculated that the absolute time associated with the 1st data collection sample is (T+0×t); the relative timestamp information associated with the 2nd data collection sample is expressed by a numerical index value of 1, and then, it may be calculated that the absolute time associated with the 2nd data collection sample is (T+1×t); and the relative timestamp information associated with the 3rd data collection sample is expressed by a numerical index value of 2, and then, it may be calculated that the absolute time associated with the 3rd data collection sample is (T+2×t), and so on.

Seventh type of information: location-related information associated with the data collection sample.

Optionally, the location-related information is used for indicating a geographical location of the terminal device when collecting the data collection sample.

Optionally, the location-related information may be expressed using polar coordinates, spherical coordinates, two-dimensional coordinates or three-dimensional coordinates. Here, the two-dimensional coordinates include longitude information and latitude information; and the three-dimensional coordinates include longitude information, latitude information and altitude information.

It should be noted that each data collection sample in the first data may include only one of the above first to seventh types of information, or may include a combination of multiple types among the above first to seventh types of information. For example, each data collection sample may include measurement data or sensor information collected at a specific time, in a specific location or under a specific state. In practical applications, the type of information in each data collection sample may be configured based on protocol agreements, system agreements, terminal requirements, scenario requirements or the like, which is not exhaustively listed here.

An association relationship between the second information and the data collection sample(s) in the embodiments of the present application is introduced below.

In some embodiments, there is a one-to-one association relationship or one-to-many association relationship between the second information and the data collection sample(s).

Optionally, if the terminal device may use different configurations/be in different operating states when collecting different data collection samples, there is a one-to-one association relationship between the second information and the data collection sample(s). If the terminal device uses the same configuration/is in the same operating state when collecting all data collection samples, one piece of second information is associated with all data collection samples. If the terminal device uses the same configuration/is in the same operating state when collecting a group of data collection samples and may use different configurations/be in different operating states when collecting different groups of samples, one piece of second information is associated with one group of data collection samples.

Optionally, if there is a one-to-one association relationship between the second information and the data collection sample(s), the first information may include one or more pieces of second information, and the one or more pieces of second information are associated one-to-one with one or more data collection samples in the first data.

Optionally, if there is a one-to-many association relationship between the second information and the data collection sample(s), the first information may include one or more pieces of second information, and each piece of second information may be associated with multiple data collection samples in the first data, where the number of data collection samples is greater than the number of pieces of second information. When the first information includes one piece of second information, the second information may be associated with all data collection samples. When the first information includes multiple pieces of second information, each piece of second information may be associated with a part of data collection samples in the first data, for example, associated with a group of data collection samples, or associated with one data collection sample or multiple consecutive data collection samples.

In some embodiments, the second information includes the first identification information or includes an index for indicating the first identification information. That is, the second information may indicate the first identification information by carrying the first identification information itself or by using an index.

In some embodiments, the index of the first identification information is used for indicating, among one or more pieces of first identification information, the first identification information associated with the collection process of the first data; and the first information further includes the one or more pieces of first identification information. The one or more pieces of first identification information here may be understood as a set of candidate first identification information. For example, when the one or more pieces of first identification information include n character strings, the corresponding indices are 0 to n-1 (or 1 to n), respectively, and index i (0≤i≤n-1) may be used for indicating the (i+1)-th character string among the n character strings. When reporting the index of the first identification information, the terminal device also reports the n character strings, so that the receiving end may determine the associated first identification information from the n character strings according to the index.

In some embodiments, each of the one or more pieces of first identification information is used to determine an index associated with the first identification information based on a predefined manner or a default manner.

For example, the predefined manner or the default manner may be agreed upon by a protocol or a system. For example, the predefined manner or the default manner is that the index of the first identification information is related to the order of appearance of the first identification information among the one or more pieces of first identification information. For example, an index of the first appearing first identification information is 0, an index of the second appearing first identification information is 1, and so on.

In some embodiments, the first information further includes quantity information of data collection sample(s) associated with the first identification information.

For example, when the first information includes multiple pieces of second information, each piece of second information indicates one piece of first identification information, and may be associated with one data collection sample or multiple consecutive data collection samples. For the first identification information indicated by each piece of second information, the first information may further include the quantity information of data collection sample(s) associated with the first identification information, so that the receiving end can sequentially determine, from the received data collection samples, the data collection sample associated with the first identification information according to the quantity information.

To facilitate understanding of the technical solutions in the above embodiments, specific examples of the association relationship between the first identification information and the first data are provided below.

### Example I

The first identification information is associated with the first data as a whole, that is, the first identification information is associated with all data collection samples included in the first data, as shown in Table 1 below.

**Table 1 association relationship example I between first identification information and first data**

| A single data collection and reporting process by the terminal device includes the following information: |
|---|
| First identification information |
| Data collection sample 1 |
| Data collection sample 2 |
| ... |
| Data collection sample n |

In Table 1, the first data reported this time includes n data collection samples, where n is a positive integer. All data collection samples included in the first data are associated with a unique piece of first identification information, where the first identification information is associated with the configuration used by the terminal device and/or the operating state of the terminal device when collecting the first data, and/or the precision of the first data. That is, all data collection samples included in the first data reported this time are collected under the same terminal device configuration and/or the operating state, or have the same precision.

### Example II

There is a one-to-one association relationship between the first identification information and one or more data collection samples included in the first data. Table 2 and Table 3 are two optional manners.

**Table 2 association relationship example II-1 between first identification information and first data**

| A single data collection and reporting process by the terminal device includes the following information: |
|---|
| Data collection sample 1 and first identification information 1 associated with data collection sample 1 |
| Data collection sample 2 and first identification information 2 associated with data collection sample 2 |
| ... |
| Data collection sample n and first identification information n associated with data collection sample n |

In Table 2, the first data reported this time includes n data collection samples, where n is a positive integer. Any one data collection sample included in the first data is associated with an independent piece of first identification information. That is, the configurations used by the terminal device and/or the operating states of the terminal device when recording different data collection samples may be different, and/or the precisions of the different recorded data collection samples may be different. Therefore, it is required to separately record the first identification information associated with each data collection sample.

Optionally, to further save reporting overhead for the terminal device, first identification information parameters associated with certain data collection samples included in the first data may not be present or reported. In other words, the first identification information is defined as an optional reporting parameter. If first identification information associated with a certain data collection sample included in the first data is not present, it is considered that a value of the first identification information associated with the data collection sample is the same as a value of the first identification information associated with the previous data collection sample for which the first identification information was explicitly reported. For example, the terminal device reports 7 data collection samples this time, where the first identification information associated with the first data collection sample is reported along with the information of the data collection sample, the information of the second and third data collection samples is reported but their respective associated first identification information is not reported, the first identification information associated with the fourth data collection sample is reported along with the information of the data collection sample, and the information of the fifth, sixth and seventh data collection samples is reported but their respective associated first identification information is not reported. Then, it is considered that the values of the first identification information associated with the information of the second and third data collection samples are the same as the value of the first identification information associated with the first data collection sample; and similarly, the values of the first identification information associated with the information of the fifth, sixth and seventh data collection samples are the same as the value of the first identification information associated with the fourth data collection sample.

**Table 3 association relationship example II-2 between first identification information and first data**

| A single data collection and reporting process by the terminal device includes the following information: |
|---|
| A set of first identification information: first identification information 1, first identification information 2, ..., first identification information m |
| Data collection sample 1 and index 1 of first identification information associated with data collection sample 1 |
| Data collection sample 2 and index 2 of first identification information associated with data collection sample 2 |
| ... |
| Data collection sample n and index n of first identification information associated with data collection sample n |

In Table 3, the first data reported this time includes n data collection samples, where m and n are positive integers. Any one data collection sample included in the first data is associated with an index of an independent piece of first identification information, and the index of the first identification information points to first identification information at the corresponding position in the set of first identification information reported in Table 3. In this case, in addition to reporting the first data and the index of the first identification information associated with the first data, the terminal device is also required to report the set of first identification information. Each piece of first identification information in the set of first identification information determines its associated index according to the order of appearance of the first identification information in the set. That is, the configurations used by the terminal device and/or the operating states of the terminal device when recording different data collection samples may be different, and/or the precisions of the different recorded data collection samples may be different. Therefore, it is required to separately record the first identification information associated with each data collection sample.

Compared to the manner of directly reporting the original first identification information in Table 2, the manner in Table 3 can further save reporting overhead for the terminal device. For example, the first data reported this time includes 5 data collection samples, and a total of 3 pieces of first identification information with different values are associated. This means that the set of first identification information includes three different pieces of first identification information, denoted as first identification information 1, first identification information 2 and first identification information 3, respectively, with corresponding indices of 0, 1 and 2 in sequence. Here, the first and second data collection samples are associated with first identification information 1, the third data collection sample is associated with first identification information 2, and the fourth and fifth data collection samples are associated with first identification information 3. Then, the information to be reported this time includes: the set of first identification information (including three values: first identification information 1, first identification information 2 and first identification information 3), the first data collection sample and its associated index value 0, the second data collection sample and its associated index value 0, the third data collection sample and its associated index value 1, the fourth data collection sample and its associated index value 2, and the fifth data collection sample and its associated index value 2.

Optionally, to further save reporting overhead for the terminal device, an index parameter of first identification information associated with certain data collection samples included in the first data may not be present or reported. In other words, the index of the first identification information is defined as an optional reporting parameter. If an index parameter of the first identification information associated with a certain data collection sample included in the first data is not present, it is considered that a value of an index of the first identification information associated with the data collection sample is the same as a value of an index of the first identification information associated with the previous data collection sample for which the index of the first identification information was explicitly reported (the same index value means that the value of the associated first identification information is also the same). For example, the first data reported this time includes 7 data collection samples, and a total of 3 pieces of first identification information with different values are associated (denoted as first identification information 1, first identification information 2 and first identification information 3, respectively, with corresponding indices 0, 1 and 2 in sequence). The index of the first identification information associated with the first data collection sample is reported along with the information of the data collection sample, the information of the second and third data collection samples is reported but their respective associated indices of the first identification information are not reported, the index of the first identification information associated with the fourth data collection sample is reported along with the information of the data collection sample, and the information of the fifth, sixth and seventh data collection samples is reported but their respective associated indices of the first identification information are not reported. Then, it is considered that the index values of the first identification information associated with the information of the second and third data collection samples are the same as the index value of the first identification information associated with the first data collection sample (that is, the first, second and third data collection samples are associated with the same first identification information; or in other words, the configurations used by the terminal device and/or the operating states of the terminal device when recording the first, second and third data collection samples are the same, and/or the recorded different data collection samples have the same precision); and similarly, the index values of the first identification information associated with the information of the fifth, sixth and seventh data collection samples are the same as the index value of the first identification information associated with the fourth data collection sample (that is, the fourth, fifth, sixth and seventh data collection samples are associated with the same first identification information, or in other words, the configurations used by the terminal device and/or the operating states of the terminal device when recording the fourth, fifth, sixth and seventh data collection samples are the same).

### Example III

There is a one-to-many association relationship between the first identification information and one or more data collection samples included in the first data. Table 4 and Table 5 are two optional methods.

**Table 4 association relationship example III-1 between first identification information and first data**

| A single data collection and reporting process by the terminal device includes the following information: |
|---|
| {Data collection sample 11, data collection sample 12, ..., data collection sample 1x} and first identification information 1 associated with the first group of data collection samples |
| {Data collection sample 21, data collection sample 22, ..., data collection sample 2y} and first identification information 2 associated with the second group of data collection samples |
| ... |
| {Data collection sample n1, data collection sample n2, ..., data collection sample nz} and first identification information n associated with the n-th group of data collection samples |

In Table 4, the first data reported this time includes n groups of data collection samples, where the number of data collection samples in each group is the same or different, and the parameters n, x, y and z are all positive integers. Any one group of data collection samples included in the first data is associated with an independent piece of first identification information. That is, the configurations used by the terminal device and/or the operating state of the terminal device when recording different groups of data collection samples may be different, and/or the precisions of the different recorded groups of data collection samples may be different. Therefore, it is required to separately record the first identification information associated with each group of data collection samples.

Optionally, to further save reporting overhead for the terminal device, a first identification information parameter associated with a certain group of data collection samples included in the first data may not be present or reported. In other words, the first identification information is defined as an optional reporting parameter. If the first identification information parameter associated with a certain group of data collection samples included in the first data is not present, it is considered that a value of the first identification information associated with the group of data collection samples is the same as a value of the first identification information associated with the previous group of data collection samples for which the first identification information was explicitly reported. For example, the terminal device reports 7 groups of data collection samples this time, the first identification information associated with the first group of data collection samples is reported along with the information of the data collection sample, the information of the second and third groups of data collection samples is reported but their respective associated first identification information is not reported, the first identification information associated with the fourth group of data collection samples is reported along with the information of the data collection sample, and the information of the fifth, sixth and seventh groups of data collection samples is reported but their respective associated first identification information is not reported. Then, it is considered that the values of the first identification information associated with the information of the second and third groups of data collection samples are the same as the value of the first identification information associated with the first group of data collection samples; and similarly, the values of the first identification information associated with the information of the fifth, sixth and seventh groups of data collection samples are the same as the value of the first identification information associated with the fourth group of data collection samples.

**Table 5 association relationship example III-2 between first identification information and first data**

| A single data collection and reporting process by the terminal device includes the following information: |
|---|
| Set of first identification information: first identification information 1, first identification information 2, ..., first identification information m |
| {Data collection sample 11, data collection sample 12, ..., data collection sample 1x} and index 1 of first identification information associated with the first group of data collection samples |
| {Data collection sample 21, data collection sample 22, ..., data collection sample 2y} and index 2 of first identification information associated with the second group of data collection samples |
| ... |
| {Data collection sample n1, data collection sample n2, ..., data collection sample nz} and index n of first identification information associated with the n-th group of data collection samples |

In Table 5, the first data reported this time includes n groups of data collection samples, where the number of data collection samples in each group is the same or different, and the parameters m, n, x, y and z are all positive integers. Any one group of data collection samples included in the first data is associated with an index of an independent piece of first identification information, and the index of the first identification information points to first identification information at the corresponding position in the set of first identification information reported in Table 5. In this case, in addition to reporting the first data and the index of the first identification information associated with the first data, the terminal device is also required to report the set of first identification information. Each piece of first identification information in the set of first identification information determines its associated index according to the order of appearance of the first identification information in the set. That is, the configurations used by the terminal device and/or the operating states of the terminal device when recording different groups of data collection samples may be different, and/or the precisions of the different recorded groups of data collection samples may be different. Therefore, it is required to separately record the first identification information associated with each group of data collection samples.

Compared to the manner of directly reporting the original first identification information in Table 4, the manner in Table 5 can further save reporting overhead for the terminal device. For example, the first data reported this time includes 5 groups of data collection samples, and a total of 3 pieces of first identification information with different values are associated. This means that the set of first identification information includes three different pieces of first identification information, denoted as first identification information 1, first identification information 2 and first identification information 3, respectively, with corresponding indices of 0, 1 and 2 in sequence. The first and second groups of data collection samples are associated with first identification information 1, the third group of data collection samples is associated with first identification information 2, and the fourth and fifth groups of data collection samples are associated with first identification information 3. Then, the information to be reported this time includes: the set of first identification information (including three values: first identification information 1, first identification information 2 and first identification information 3), the first group of data collection samples and its associated index value 0, the second group of data collection samples and its associated index value 0, the third group of data collection samples and its associated index value 1, the fourth group of data collection samples and its associated index value 2, and the fifth group of data collection samples and its associated index value 2.

Optionally, to further save reporting overhead for the terminal device, an index parameter of first identification information associated with a certain group of data collection samples included in the first data may not be present or reported. In other words, the index of the first identification information is defined as an optional reporting parameter. If an index parameter of the first identification information associated with a certain group of data collection samples included in the first data is not present, it is considered that a value of an index of the first identification information associated with the group of data collection samples is the same as a value of an index of the first identification information associated with the previous group of data collection samples for which the index of the first identification information was explicitly reported (the same index value means that the value of the associated first identification information is also the same). For example, the first data reported this time includes 7 groups of data collection samples, and a total of 3 pieces of first identification information with different values are associated (denoted as first identification information 1, first identification information 2 and first identification information 3, respectively, with corresponding indices of 0, 1 and 2 in sequence). The index of the first identification information associated with the first group of data collection samples is reported along with the information of the data collection sample, the information of the second and third groups of data collection samples is reported but their respective associated indices of the first identification information are not reported, the index of the first identification information associated with the fourth group of data collection samples is reported along with the information of the data collection sample, and the information of the fifth, sixth and seventh groups of data collection samples is reported but their respective associated indices of the first identification information are not reported. Then, it is considered that the index values of the first identification information associated with the information of the second and third groups of data collection samples are the same as the index value of the first identification information associated with the first group of data collection samples (that is, the first, second and third groups of data collection samples are associated with the same first identification information; or in other words, the configurations used by the terminal device and/or the operating states of the terminal device when recording the first, second and third groups of data collection samples are the same, and/or the recorded different groups of data collection samples have the same precision); and similarly, the index values of the first identification information associated with the information of the fifth, sixth and seventh groups of data collection samples are the same as the index value of the first identification information associated with the fourth group of data collection samples (i.e., the fourth, fifth, sixth and seventh groups of data collection samples are associated with the same first identification information, or in other words, the configurations used by the terminal device and/or the operating states of the terminal device when recording the fourth, fifth, sixth and seventh groups of data collection samples are the same, and/or the recorded different groups of data collection samples have the same precision).

It can be seen that, according to the embodiments of the present application, the terminal device can flexibly configure the association relationship between the first data and the first identification information, thereby achieving flexible data collection and reporting.

In some embodiments, before the terminal device transmits the first information, the method for information transmission further includes the following. The terminal device receives seventh indication information; where the seventh indication information is used to indicate the terminal device to transmit the first data or the first information.

Specifically, the seventh indication information may be used to indicate the terminal device to transmit the first data, or may be used to indicate the terminal device to transmit the first data and the first identification information associated with the first data, or may be used to indicate the terminal device to transmit the first data and the index of the first identification information associated with the first data.

Optionally, the seventh indication information may be transmitted by a receiving end of the first information, such as a network device or a server.

In some embodiments, before the terminal device transmits the first information, the method for information transmission further includes the following. The terminal device receives eighth indication information in a case where the seventh indication information is used to indicate the terminal device to transmit the first data; where the eighth indication information is used to indicate the terminal device to transmit the second information.

Specifically, the eighth indication information may be used to indicate the terminal device to transmit the first identification information associated with the first data, or may be used to indicate the terminal device to transmit the index of the first identification information associated with the first data, or may be used to indicate the terminal device to transmit both the first identification information associated with the first data and the index of the first identification information associated with the first data.

Optionally, the eighth indication information may be transmitted by the receiving end of the first information, such as a network device or a server.

In some embodiments, before the terminal device transmits the first information, the method for information transmission further includes the following. The terminal device transmits ninth indication information; where the ninth indication information is used for indicating that the terminal device has unreported first data or first information.

Optionally, the terminal device may transmit the ninth indication information to the receiving end of the first information, for example, transmit the ninth indication information to a network device or a server, to trigger the terminal device to transmit the first information to the network device or the server.

The above embodiments may also be implemented in combination. For example, the terminal device transmits the ninth indication information to the network device to indicate there is unreported first data or first information. Then, the terminal device receives the seventh indication information or receives the seventh indication information and the eighth indication information, transmitted from the network device. In a case of receiving the seventh indication information or receiving the seventh indication information and the eighth indication information, the first information is transmitted. Through the above embodiments, flexible data collection and reporting can be achieved.

Corresponding to the above method, FIG. 3 is a schematic flowchart of a method for information transmission according to another embodiment of the present application. Optionally, the method may be applied to the system illustrated in FIG. 1 but is not limited thereto. The method includes the following.

In S310: a network device receives first information transmitted by a terminal device; where the first information includes first data and second information associated with the first data, and the second information is used for indicating first identification information associated with a collection process of the first data, the first data including one or more data collection samples.

Here, the network device may be an access network device, a core network device, an OAM device, or the like, and the specific implementations of which may refer to the above embodiments.

Optionally, the specific settings of the first data, the second information and an association relationship between the first data and the second information in the first information may be implemented with reference to the relevant descriptions in the above embodiments, which will not be described in detail here.

In some embodiments, before the network device receives the first information transmitted by the terminal device, the method for information transmission further includes the following. The network device transmits seventh indication information to the terminal device; where the seventh indication information is used to indicate the terminal device to transmit the first data or the first information.

In some embodiments, before the network device receives the first information transmitted by the terminal device, the method for information transmission further includes the following. The network device transmits eighth indication information to the terminal device in a case where the seventh indication information is used to indicate the terminal device to transmit the first data; where the eighth indication information is used to indicate the terminal device to transmit the second information.

In some embodiments, before the network device receives the first information transmitted by the terminal device, the method for information transmission further includes the following. The network device receives ninth indication information transmitted by the terminal device; where the ninth indication information is used for indicating that the terminal device has unreported first data or first information.

The specific indication contents of the seventh indication information to the ninth indication information may be implemented with reference to the relevant descriptions in the above embodiments, which will not be described in detail here.

In practical applications, the network device may further process the first information. In some embodiments, the method for information transmission may further include the following. The network device transmits the first information to a server. For example, the first information may be used for the server to train a model.

In some embodiments, the method for information transmission may further include the following. The network device associates the first information with third information; where the third information is used for indicating second identification information associated with the collection process of the first data. Optionally, the third information may be used for indicating second identification information associated with information of the network device during the collection process of the first data.

In some embodiments, the second identification information is associated with a configuration used by the network device when the terminal device collects the first data.

Optionally, the network device may determine the configuration used by the network device at the corresponding moment according to time-related information associated with the data collection sample in the first information.

Optionally, the configuration used by the network device when the terminal device collects the first data may include a hardware configuration and/or a network configuration. For example, the hardware configuration may include one or more of: an antenna module configuration, a modem module configuration, a power amplification module configuration, or a camera module configuration.

In some embodiments, there is a one-to-one association relationship or one-to-many association relationship between the third information and the data collection sample(s).

Optionally, the association relationship between the third information and the data collection sample(s) may be configured with reference to the association relationship between the second information and the data collection sample(s) in the above embodiments. Optionally, if the network device may use different configurations when different data collection samples are collected, there is a one-to-one association relationship between the third information and the data collection sample(s). If the network device uses the same configuration when all data collection samples are collected, one piece of third information is used to be associated with all data collection samples. If the network device uses the same configuration when a group of data collection samples is collected and the network device may use different configurations when different groups of samples are collected, one piece of third information is associated with one group of data collection samples.

In some embodiments, the third information may include the second identification information or includes an index for indicating the second identification information. That is, the third information may indicate the second identification information by carrying the second identification information itself or by using the index.

In some embodiments, the index of the second identification information is used for indicating, among one or more pieces of second identification information, the second identification information associated with the collection process of the first data. When transmitting the third information, the network device may further transmit the one or more pieces of second identification information, to enable the receiving end to be able to determine the corresponding second identification information according to the index.

In some embodiments, each of the one or more pieces of second identification information is used to determine the index associated with the second identification information based on a predefined manner or default manner.

For example, the index of the second identification information is related to the order of appearance of the second identification information among the one or more pieces of second identification information.

It is to be understood that the association relationship between the third information/second identification information and the first data/data collection samples may be implemented with reference to the descriptions related to the second information/first identification information in the above embodiments, which will not be described in detail here.

To facilitate understanding, a specific example is provided below: the first data reported by the terminal device includes 7 data collection samples, where 2 data collection samples (corresponding to sample 1 and sample 2) are collected in cell 1, the corresponding data recording moments are t1 and t2, respectively, and the second identifier associated with the configuration used by cell 1 at moments t1 and t2 is ID1. 3 data collection samples (corresponding to sample 3, sample 4 and sample 5) are collected in cell 2, the corresponding data recording moments are t3, t4 and t5, respectively, and the second identifier associated with the configuration used by cell 2 at moments t3, t4 and t5 is ID2. 2 samples (corresponding to sample 6 and sample 7) are collected in cell 3, the corresponding data recording moments are t6 and t7, respectively, and the second identifier associated with the configuration used by cell 3 at moments t6 and t7 is ID3. After receiving the 7 data collection samples reported by the terminal device and the moment information corresponding to the data samples, the network device associates the corresponding second identification information for each data collection sample by querying the records of configurations used by different cells at different moments. That is, samples 1 and 2 are associated with ID1, samples 3, 4 and 5 are associated with ID2, and samples 6 and 7 are associated with ID3.

Through the association between the first information and the third information, it may facilitate the data collection node or the model training node on the terminal device side (e.g., an OTT server belonging to the terminal device) to locally maintain the association relationship between the second identification information and the configuration of the network device. Specifically, if the data collection node or the model training node is able to obtain the data collection samples reported by the terminal device and the second identification information associated with the data collection samples (the collected first data is associated with the corresponding second identification information by the network device), then the data collection node or the model training node can learn under which network device configuration these collected data collection samples were collected; and thus, the operations such as screening and classifying are performed on the collected data, so as to train an AI/ML model suitable for the condition for the specific network device configuration.

It should be additionally emphasized that the first identification information and the second identification information may be used in combination. That is, after obtaining the data collection samples reported by the terminal device, the first identification information associated with the data collection samples (obtained through the manners in Tables 1 to 5), and the second identification information associated with the data collection samples (the collected first data is associated with the corresponding second identification information by the network device), the data collection node or the model training node can know under which terminal device configuration and which network device configuration these collected data collection samples were collected; and thus, the operations such as screening and classifying are performed on the collected data, so as to train an AI/ML model suitable for the condition for the specific terminal device configuration and/or the network device configuration.

In some embodiments, the method for information transmission may further include the following. The network device performs information desensitization processing on the first information collected by the terminal device; or performs information desensitization processing on first information after it is associated with the third information.

Optionally, the information desensitization processing may include data anonymization processing. The data anonymization processing may be used to prevent the receiving end of the first information from obtaining relevant user information according to the first information. For example, the data anonymization processing may include deleting user information from the first information and/or mixing the first information associated with different users, and so on.

Through the information desensitization processing, user privacy may be protected. It is to be understood that model training itself does not depend on specific user data, thus the information desensitization operation generally does not affect the quality of the model training data.

In some embodiments, the information transmission method further includes the following.

The network device transmits the first information collected by the terminal device to a server, or transmits first information after it is associated with third information to a server, or transmits first information after it is associated with the third information and subjected to information desensitization processing to a server, or transmits first information subjected to information desensitization processing to a server.

Corresponding to the above method, FIG. 4 is a schematic flowchart of yet another embodiment of a method for information transmission in the present application. The method includes the following.

In S410: a server receives first information; where the first information is collected by a terminal device, or is collected and subsequently associated with third information and/or subjected to information desensitization processing; where the first information includes first data and second information associated with the first data, the second information is used for indicating first identification information associated with a collection process of the first data, and the first data includes one or more data collection samples.

Here, the server may be deployed within a network device or outside a network device. For example, the server may be an OTT server. The server may be used for data collection or model training.

Optionally, the server may receive the first information reported by the terminal device, or receive the first information reported by the terminal device and forwarded by the network device, or receive the first information from the network device that is reported by the terminal device to the network device and subsequently associated with the third information by the network device and/or subjected to information desensitization.

In some embodiments, the first identification information is associated with one or more of:
a configuration used by the terminal device when collecting the first data;
an operating state of the terminal device when collecting the first data; or
a precision of the first data collected by the terminal device.

In some embodiments, the third information is used for indicating second identification information associated with the collection process of the first data, and the second identification information is associated with a configuration used by the network device when the terminal device collects the first data.

The first identification information, the association relationship between the first identification information and the first data, the second identification information, the association relationship between the second identification information and the first data, and the information desensitization processing may all be implemented with reference to the above embodiments, which will not be described in detail here.

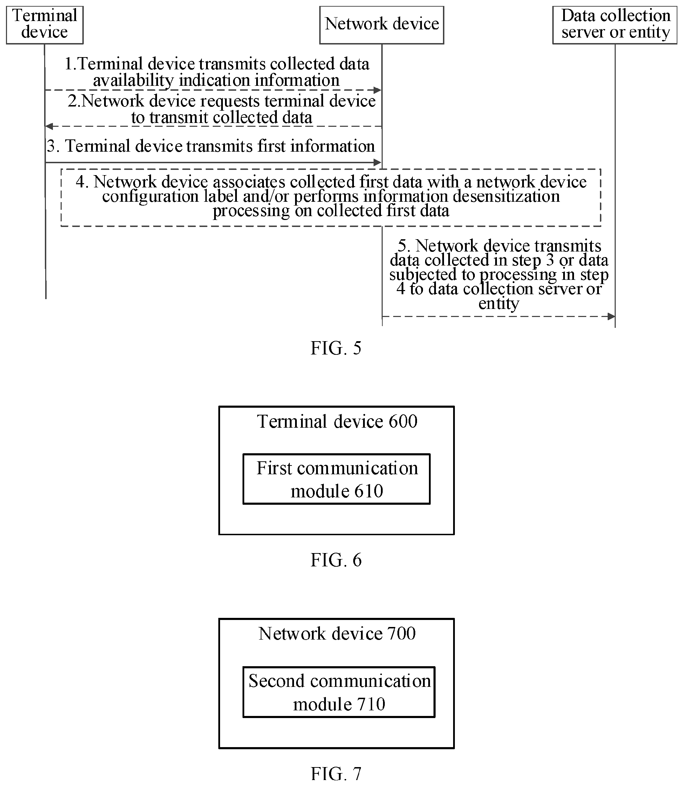

FIG. 5 is a schematic diagram of an application example of a method for information transmission according to an embodiment of the present application. As illustrated in FIG. 5, the method may include the following.

In step 1: the terminal device transmits collected data availability indication information (ninth indication information).

In step 2: the network device requests the terminal device to transmit collected data (requested through seventh indication information, or requested through seventh indication information and eighth indication information).

In step 3: the terminal device transmits the collected data (first information).

In step 4: the network device associates the collected first data with a network device configuration label (second identification information) and/or performs information desensitization processing on the collected first data.

In step 5: the network device transmits the data collected in step 3 or transmits the data subjected to the processing in step 4 to a data collection server or entity.

In conjunction with the descriptions of the above embodiments, it is to be understood that the above application example may yield the following beneficial effects.
(1) By reporting the collected data and the terminal device configuration information when performing data collection, the data collection party may perform classification on the collected data for different terminal device configurations, thereby training an AI model suitable for a specific terminal device configuration. Compared to no data classification, the AI model trained in the above manner exhibits superior performance under a specific terminal device configuration environment.
(2) By reporting the identification information associated with the terminal device configuration information or index information of the identification information, direct leakage of private configuration information of the terminal device over the air interface is avoided, which greatly protects the private information of the terminal device, meets user data regulatory requirements and complies with the principle of not disclosing commercial secrets.
(3) Adding the network device configuration label to the collected data by the network device rather than the terminal device reduces the implementation possibility of the terminal device directly knowing the network device configuration, thereby facilitating the protection of the configuration privacy of the network device.
(4) The content of the information reported by the terminal device can be dynamically indicated through the indication information interacted with the network device, thereby achieving flexible data collection and reporting.

FIG. 6 is a schematic block diagram of a terminal device 600 according to an embodiment of the present application. The terminal device 600 may include:
a first communication module 610, configured to transmit first information; where the first information includes first data and second information associated with the first data, and the second information is used for indicating first identification information associated with a collection process of the first data, the first data including one or more data collection samples.

In an implementation, the first identification information is associated with one or more of:
a configuration used by the terminal device when collecting the first data;
an operating state of the terminal device when collecting the first data; or
a precision of the first data collected by the terminal device.

In an implementation, there is a one-to-one association relationship or a one-to-many association relationship between the second information and the data collection sample(s).

In an implementation, the second information includes the first identification information or includes an index for indicating the first identification information.

In an implementation, the index is used for indicating, among one or more pieces of first identification information, the first identification information associated with the collection process of the first data; and the first information further includes the one or more pieces of first identification information.

In an implementation, each of the one or more pieces of first identification information is used to determine an index associated with the first identification information based on a predefined manner or a default manner.

In an implementation, the first information further includes quantity information of data collection sample(s) associated with the first identification information.

In an implementation, each data collection sample included in the first data includes one or more of:
first measurement information obtained by the terminal device by measuring a reference signal transmitted by a network device;
cell identity information associated with the first measurement information;
second measurement information obtained by the terminal device by measuring a reflected signal of a reference signal transmitted by the terminal device;
sensor information collected by the terminal device;
information related to a state of the terminal device and recorded by the terminal device;
time-related information associated with the data collection sample; or
location-related information associated with the data collection sample.

In an implementation, the sensor information includes one or more of:
movement direction information; movement speed information; atmospheric pressure information; air temperature information; device temperature information; humidity information; gravity information; or remaining battery level information.

In an implementation, the information related to the state of the terminal device includes:
first indication information, used for indicating whether the terminal device is in an out-of-service state or in an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; and
sixth indication information, used for indicating whether the terminal device is in a multi USIM card operating state.

In an e implementation, the first communication module 610 is further configured to:
receive seventh indication information; where the seventh indication information is used to indicate the terminal device to transmit the first data or the first information.

In an implementation, the first communication module 610 is further configured to:
receive eighth indication information in a case where the seventh indication information is used to indicate the terminal device to transmit the first data; where the eighth indication information is used to indicate the terminal device to transmit the second information.

In an implementation, the first communication module 610 is further configured to:
transmit ninth indication information; where the ninth indication information is used for indicating that the terminal device has unreported first data or first information.

The terminal device 600 in the embodiment of the present application is capable of implementing the corresponding functions of the terminal device in the above method embodiments. The processes, functions, implementations and beneficial effects corresponding to various modules (sub-modules, units, components and so on) in the terminal device 600 may refer to the corresponding descriptions of the above method embodiments, and will not be repeated here. It should be noted that the functions described with respect to the various modules (sub-modules, units, components and so on) in the terminal device 600 of the embodiments of the present application may be implemented by different modules (sub-modules, units, components and so on) or by the same module (sub-module, unit, component and so on).

FIG. 7 is a schematic block diagram of a network device 700 according to an embodiment of the present application. The network device 700 may include:
a second communication module 710, configured to receive first information transmitted by a terminal device; where the first information includes first data and second information associated with the first data, and the second information is used for indicating first identification information associated with a collection process of the first data, the first data including one or more data collection samples.

In an implementation, the first identification information is associated with one or more of:
a configuration used by the terminal device when collecting the first data;
an operating state of the terminal device when collecting the first data; or
a precision of the first data collected by the terminal device.

In an implementation, there is a one-to-one association relationship or a one-to-many association relationship between the second information and the data collection sample(s).

In an implementation, the second information includes the first identification information or includes an index for indicating the first identification information.

In an implementation, the index is used for indicating, among one or more pieces of first identification information, the first identification information associated with the collection process of the first data; and the first information further includes the one or more pieces of first identification information.

In an implementation, each of the one or more pieces of first identification information is used to determine an index associated with the first identification information based on a predefined manner or a default manner.

In an implementation, the first information further includes quantity information of data collection sample(s) associated with the first identification information.

In an implementation, each data collection sample included in the first data includes one or more of:
first measurement information obtained by the terminal device by measuring a reference signal transmitted by the network device;
cell identity information associated with the first measurement information;
second measurement information obtained by the terminal device by measuring a reflected signal of a reference signal transmitted by the terminal device;
sensor information collected by the terminal device;
information related to a state of the terminal device and recorded by the terminal device;
time-related information associated with the data collection sample; or
location-related information associated with the data collection sample.

In an implementation, the sensor information includes one or more of:
movement direction information; movement speed information; atmospheric pressure information; air temperature information; device temperature information; humidity information; gravity information; or remaining battery level information.

In an implementation, the information related to the state of the terminal device includes:
first indication information, used for indicating whether the terminal device is in an out-of-service state or in an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; and
sixth indication information, used for indicating whether the terminal device is in a multi USIM card operating state.

In an implementation, the second communication module 710 is further configured to:
transmit seventh indication information to the terminal device; where the seventh indication information is used to indicate the terminal device to transmit the first data or the first information.

In an implementation, the second communication module 710 is further configured to:
transmit eighth indication information to the terminal device in a case where the seventh indication information is used to indicate the terminal device to transmit the first data; where the eighth indication information is used to indicate the terminal device to transmit the second information.

In an implementation, the second communication module 710 is further configured to:
receive ninth indication information transmitted by the terminal device; where the ninth indication information is used for indicating that the terminal device has unreported first data or first information.

In an implementation, the second communication module 710 is further configured to:
transmit the first information to a server.

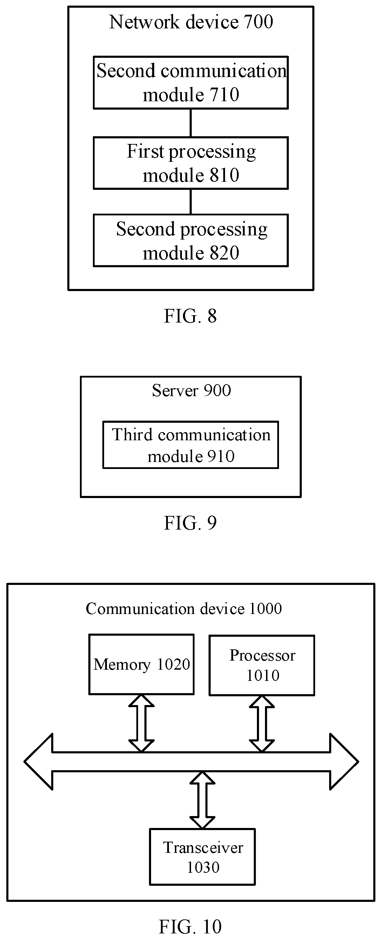

In an implementation, as illustrated in FIG. 8, the network device 700 further includes a first processing module 810, and the first processing module 810 is configured to:
associate the first information with third information; where the third information is used for indicating second identification information associated with the collection process of the first data.

In an implementation, the second identification information is associated with a configuration used by the network device when the terminal device collects the first data.

In an implementation, as illustrated in FIG. 8, the network device 700 further includes a second processing module 820, and the second processing module 820 is configured to perform information desensitization processing on the first information collected by the terminal device, or perform information desensitization processing on first information after it is associated with third information.

In an implementation, the second communication module 710 is further configured to:
transmit the first information collected by the terminal device to a server; or transmit first information after it is associated with third information to a server; or transmit first information after it is associated with the third information and subjected to information desensitization processing to a server; or transmit first information subjected to information desensitization processing to a server.

The network device 700 in the embodiments of the present application is capable of implementing the corresponding functions of the network device in the above method embodiments. The processes, functions, implementations and beneficial effects corresponding to various modules (sub-modules, units, components and so on) in the network device 700 may refer to the corresponding descriptions of the above method embodiments, and will not be repeated here. It should be noted that the functions described with respect to the various modules (sub-modules, units, components and so on) in the network device 700 of the embodiments of the application may be implemented by different modules (sub-modules, units, components and so on) or by the same module (sub-module, unit, component and so on).

FIG. 9 is a schematic block diagram of a server 900 according to an embodiment of the present application. The server 900 may include:
a third communication module 910, configured to receive first information; where the first information is collected by a terminal device, or is collected and subsequently associated with third information and/or subjected to information desensitization processing; where the first information includes first data and second information associated with the first data, the second information is used for indicating first identification information associated with a collection process of the first data, and the first data includes one or more data collection samples.

In an implementation, the first identification information is associated with one or more of:
a configuration used by the terminal device when collecting the first data;
an operating state of the terminal device when collecting the first data; or
a precision of the first data collected by the terminal device.

In an implementation, the third information is used for indicating second identification information associated with the collection process of the first data, and the second identification information is associated with a configuration used by a network device when the terminal device collects the first data.

FIG. 10 is a schematic structural diagram of a communication device 1000 according to an embodiment of the present application. The communication device 1000 includes a processor 1010, and the processor 1010 may invoke a computer program from a memory and execute the computer program, to enable the communication device 1000 to implement the methods in the embodiments of the present application.

In an implementation, the communication device 1000 may further include a memory 1020. The processor 1010 may invoke a computer program from the memory 1020 and execute the computer program, to enable the communication device 1000 to implement the methods in the embodiments of the present application.

The memory 1020 may be a separate device independent of the processor 1010, or may be integrated into the processor 1010.

In an implementation, the communication device 1000 may further include a transceiver 1030. The processor 1010 may control the transceiver 1030 to communicate with other devices, and specifically, to transmit information or data to other devices, or receive information or data transmitted by other devices.

The transceiver 1030 may include a transmitter and a receiver. The transceiver 1030 may further include antenna(s), and the number of antenna(s) may be one or more.

In an implementation, the communication device 1000 may be the network device in the embodiments of the present application, and the communication device 1000 may implement the corresponding procedures implemented by the network device in the various methods of the embodiments of the present application, which will not be repeated here for the sake of brevity.

In an implementation, the communication device 1000 may be the terminal device in the embodiments of the present application, and the communication device 1000 may implement the corresponding procedures implemented by the terminal device in the various methods of the embodiments of the present application, which will not be repeated here for the sake of brevity.

In an implementation, the communication device 1000 may be the server in the embodiments of the present application, and the communication device 1000 may implement the corresponding procedures implemented by the server in the various methods of the embodiments of the present application, which will not be repeated here for the sake of brevity.

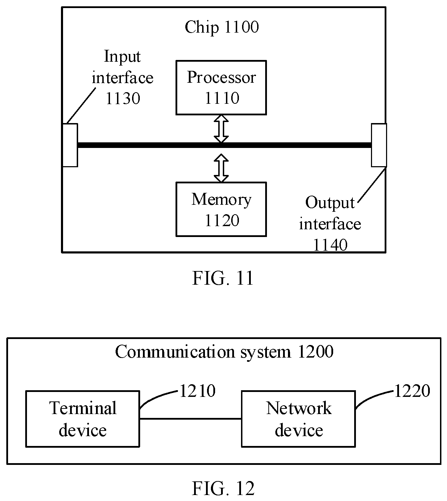

FIG. 11 is a schematic structural diagram of a chip 1100 according to an embodiment of the present application. The chip 1100 includes a processor 1110, and the processor 1110 may invoke a computer program from a memory and execute the computer program, to implement the methods in the embodiments of the present application.

In an implementation, the chip 1100 may further include a memory 1120. The processor 1110 may invoke a computer program from the memory 1120 and execute the computer program, to implement the methods performed by the terminal device or the network device in the embodiments of the present application.

The memory 1120 may be a separate device independent of the processor 1110, or may be integrated into the processor 1110.

In an implementation, the chip 1100 may further include an input interface 1130. The processor 1110 may control the input interface 1130 to communicate with other devices or chips, and specifically, may obtain information or data transmitted by other devices or chips.

In an implementation, the chip 1100 may further include an output interface 1140. The processor 1110 may control the output interface 1140 to communicate with other devices or chips, and specifically, may output information or data to other devices or chips.

In an implementation, the chip may be applied to the network device in the embodiments of the present application, and the chip may implement the corresponding procedures implemented by the network device in the various methods of the embodiments of the present application, which will not be repeated here for the sake of brevity.

In an implementation, the chip may be applied to the terminal device in the embodiments of the present application, and the chip may implement the corresponding procedures implemented by the terminal device in the various methods of the embodiments of the present application, which will not be repeated here for the sake of brevity.

In an implementation, the chip may be applied to the server in the embodiments of the present application, and the chip may implement the corresponding procedures implemented by the server in the various methods of the embodiments of the present application, which will not be repeated here for the sake of brevity.

The chips applied to the network device, the terminal device and the server may be the same chip or different chips.

It should be understood that the chip mentioned in the embodiments of the present application may also be referred to as a system-level chip, a system chip, a chip system, a system-on-a-chip, or the like.

The above processor may be a general-purpose processor, a digital signal processor (DSP), a field programmable gate array (FPGA), an application specific integrated circuit (ASIC) or other programmable logic devices, transistor logic devices, discrete hardware components or the like. The above general-purpose processor may be a microprocessor, or may also be any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not limiting illustration. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but is not limited to, these and any other suitable types of memories.

FIG. 12 is a schematic block diagram of a communication system 1200 according to an embodiment of the present application. The communication system 1200 includes a terminal device 1210 and a network device 1220.

The terminal device 1210 transmits first information; where the first information includes first data and second information associated with the first data, and the second information is used for indicating first identification information associated with a collection process of the first data, the first data including one or more data collection samples.

The network device 1220 receives the first information transmitted by the terminal device 1210; where the first information includes the first data and the second information associated with the first data, and the second information is used for indicating the first identification information associated with the collection process of the first data, the first data including the one or more data collection samples.

Optionally, the communication system may further include a server. The server is configured to receive the first information; where the first information is collected by the terminal device 1210, or is collected and subsequently associated with third information and/or subjected to information desensitization processing; where the first information includes the first data and the second information associated with the first data, and the second information is used for indicating the first identification information associated with the collection process of the first data, the first data including the one or more data collection samples.

The terminal device 1210 may be configured to implement the corresponding functions implemented by the terminal device in the above methods, the network device 1220 may be configured to implement the corresponding functions implemented by the network device in the above methods, and the server may be configured to implement the corresponding functions implemented by the server in the above methods, which will not be repeated here for the sake of brevity.

The above embodiments may be implemented in whole or in part through software, hardware, firmware or any combination thereof. When implemented by using software, the embodiments may be implemented in a form of a computer program product in whole or in part. The computer program product includes one or more computer instructions. When the computer program instructions are loaded on and executed by a computer, processes or functions according to the embodiments of the present application are generated in whole or in part. The computer may be a general-purpose computer, a dedicated computer, a computer network or any other programmable apparatuses. The computer instructions may be stored in a computer-readable storage medium or transmitted from one computer-readable storage medium to another computer-readable storage medium. For example, the computer instructions may be transmitted from a website, a computer, a server or a data center to another website, computer, server or data center via a wired manner (e.g., coaxial cable, optical fiber, or digital subscriber line (DSL)) or a wireless manner (e.g., infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a digital video disc (DVD)), a semiconductor medium (e.g., a solid state disk (SSD)), or the like.

It should be understood that, in the various embodiments of the present application, the magnitude of the serial number of each of the above processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A method for information transmission, comprising:
transmitting, by a terminal device, first information; wherein the first information comprises first data and second information associated with the first data, and the second information is used for indicating first identification information associated with a collection process of the first data, the first data comprising one or more data collection samples.

2. The method according to claim 1, wherein the first identification information is associated with one or more of:
a configuration used by the terminal device when collecting the first data;
an operating state of the terminal device when collecting the first data; or
a precision of the first data collected by the terminal device.

3. The method according to claim 1 or 2, wherein there is a one-to-one association relationship or a one-to-many association relationship between the second information and the data collection sample(s).

4. The method according to any one of claims 1 to 3, wherein the second information comprises the first identification information or comprises an index for indicating the first identification information.

5. The method according to claim 4, wherein the index is used for indicating, among one or more pieces of first identification information, the first identification information associated with the collection process of the first data; and the first information further comprises the one or more pieces of first identification information.

6. The method according to claim 5, wherein each of the one or more pieces of first identification information is used to determine an index associated with the first identification information based on a predefined manner or a default manner.

7. The method according to any one of claims 1 to 6, wherein the first information further comprises quantity information of data collection sample(s) associated with the first identification information.

8. The method according to any one of claims 1 to 7, wherein each data collection sample comprised in the first data comprises one or more of:
first measurement information obtained by the terminal device by measuring a reference signal transmitted by a network device;
cell identity information associated with the first measurement information;
second measurement information obtained by the terminal device by measuring a reflected signal of a reference signal transmitted by the terminal device;
sensor information collected by the terminal device;
information related to a state of the terminal device and recorded by the terminal device;
time-related information associated with the data collection sample; or
location-related information associated with the data collection sample.

9. The method according to claim 8, wherein the sensor information comprises one or more of:
movement direction information; movement speed information; atmospheric pressure information; air temperature information; device temperature information; humidity information; gravity information; or remaining battery level information.

10. The method according to claim 8 or 9, wherein the information related to the state of the terminal device comprises one or more of:
first indication information, used for indicating whether the terminal device is in an out-of-service state or in an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; or
sixth indication information, used for indicating whether the terminal device is in a multi universal subscriber identity module (USIM) card operating state.

11. The method according to any one of claims 1 to 10, further comprising:
receiving, by the terminal device, seventh indication information; wherein the seventh indication information is used to indicate the terminal device to transmit the first data or the first information .

12. The method according to claim 11, further comprising:
receiving, by the terminal device, eighth indication information in a case where the seventh indication information is used to indicate the terminal device to transmit the first data; wherein the eighth indication information is used to indicate the terminal device to transmit the second information.

13. The method according to any one of claims 1 to 12, further comprising:
transmitting, by the terminal device, ninth indication information; wherein the ninth indication information is used for indicating that the terminal device has unreported first data or first information.

14. A method for information transmission, comprising:
receiving, by a network device, first information transmitted by a terminal device; wherein the first information comprises first data and second information associated with the first data, and the second information is used for indicating first identification information associated with a collection process of the first data, the first data comprising one or more data collection samples.

15. The method according to claim 14, wherein the first identification information is associated with one or more of:
a configuration used by the terminal device when collecting the first data;
an operating state of the terminal device when collecting the first data; or
a precision of the first data collected by the terminal device.

16. The method according to claim 14 or 15, wherein there is a one-to-one association relationship or a one-to-many association relationship between the second information and the data collection sample(s).

17. The method according to any one of claims 14 to 16, wherein the second information comprises the first identification information or comprises an index for indicating the first identification information.

18. The method according to claim 17, wherein the index is used for indicating, among one or more pieces of first identification information, the first identification information associated with the collection process of the first data; and the first information further comprises the one or more pieces of first identification information.

19. The method according to claim 18, wherein each of the one or more pieces of first identification information is used to determine an index associated with the first identification information based on a predefined manner or a default manner.

20. The method according to any one of claims 14 to 19, wherein the first information further comprises quantity information of data collection sample(s) associated with the first identification information.

21. The method according to any one of claims 14 to 20, wherein each data collection sample comprised in the first data comprises one or more of:
first measurement information obtained by the terminal device by measuring a reference signal transmitted by the network device;
cell identity information associated with the first measurement information;
second measurement information obtained by the terminal device by measuring a reflected signal of a reference signal transmitted by the terminal device;
sensor information collected by the terminal device;
information related to a state of the terminal device and recorded by the terminal device;
time-related information associated with the data collection sample; or
location-related information associated with the data collection sample.

22. The method according to claim 21, wherein the sensor information comprises one or more of:
movement direction information; movement speed information; atmospheric pressure information; air temperature information; device temperature information; humidity information; gravity information; or remaining battery level information.

23. The method according to claim 21 or 22, wherein the information related to the state of the terminal device comprises one or more of:
first indication information, used for indicating whether the terminal device is in an out-of-service state or in an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; or
sixth indication information, used for indicating whether the terminal device is in a multi universal subscriber identity module (USIM) card operating state.

24. The method according to any one of claims 14 to 23, further comprising:
transmitting, by the network device, seventh indication information to the terminal device; wherein the seventh indication information is used to indicate the terminal device to transmit the first data or the first information.

25. The method according to claim 24, further comprising:
transmitting, by the network device, eighth indication information to the terminal device in a case where the seventh indication information is used to indicate the terminal device to transmit the first data; wherein the eighth indication information is used to indicate the terminal device to transmit the second information.

26. The method according to any one of claims 14 to 25, further comprising:
receiving, by the network device, ninth indication information transmitted by the terminal device; wherein the ninth indication information is used for indicating that the terminal device has unreported first data or first information.

27. The method according to any one of claims 14 to 26, further comprising:
transmitting, by the network device, the first information to a server.

28. The method according to any one of claims 14 to 26, further comprising:
associating, by the network device, the first information with third information; wherein the third information is used for indicating second identification information associated with the collection process of the first data.

29. The method according to claim 28, wherein the second identification information is associated with a configuration used by the network device when the terminal device collects the first data.

30. The method according to any one of claims 14 to 29, further comprising:
performing, by the network device, information desensitization processing on the first information collected by the terminal device, or performing, by the network device, information desensitization processing on first information after it is associated with third information.

31. The method according to any one of claims 14 to 30, further comprising:
transmitting, by the network device, the first information collected by the terminal device to a server; or transmitting, by the network device, first information after it is associated with third information to a server; or transmitting, by the network device, first information after it is associated with the third information and subjected to information desensitization processing to a server; or transmitting, by the network device, first information subjected to information desensitization processing to a server.

32. A method for information transmission, comprising:
receiving, by a server, first information; wherein the first information is collected by a terminal device, or is collected and subsequently associated with third information and/or subjected to information desensitization processing; wherein the first information comprises first data and second information associated with the first data, the second information is used for indicating first identification information associated with a collection process of the first data, and the first data comprises one or more data collection samples.

33. The method according to claim 32, wherein the first identification information is associated with one or more of:
a configuration used by the terminal device when collecting the first data;
an operating state of the terminal device when collecting the first data; or
a precision of the first data collected by the terminal device.

34. The method according to claim 32 or 33, wherein the third information is used for indicating second identification information associated with the collection process of the first data, and the second identification information is associated with a configuration used by a network device when the terminal device collects the first data.

35. A terminal device, comprising:
a first communication module, configured to transmit first information; wherein the first information comprises first data and second information associated with the first data, and the second information is used for indicating first identification information associated with a collection process of the first data, the first data comprising one or more data collection samples.

36. The terminal device according to claim 35, wherein the first identification information is associated with one or more of:
a configuration used by the terminal device when collecting the first data;
an operating state of the terminal device when collecting the first data; or
a precision of the first data collected by the terminal device.

37. The terminal device according to claim 35 or 36, wherein there is a one-to-one association relationship or a one-to-many association relationship between the second information and the data collection sample(s).

38. The terminal device according to any one of claims 35 to 37, wherein the second information comprises the first identification information or comprises an index for indicating the first identification information.

39. The terminal device according to claim 38, wherein the index is used for indicating, among one or more pieces of first identification information, the first identification information associated with the collection process of the first data; and the first information further comprises the one or more pieces of first identification information.

40. The terminal device according to claim 39, wherein each of the one or more pieces of first identification information is used to determine an index associated with the first identification information based on a predefined manner or a default manner.

41. The terminal device according to any one of claims 35 to 40, wherein the first information further comprises quantity information of data collection sample(s) associated with the first identification information.

42. The terminal device according to any one of claims 35 to 41, wherein each data collection sample comprised in the first data comprises one or more of:
first measurement information obtained by the terminal device by measuring a reference signal transmitted by a network device;
cell identity information associated with the first measurement information;
second measurement information obtained by the terminal device by measuring a reflected signal of a reference signal transmitted by the terminal device;
sensor information collected by the terminal device;
information related to a state of the terminal device and recorded by the terminal device;
time-related information associated with the data collection sample; or
location-related information associated with the data collection sample.

43. The terminal device according to claim 42, wherein the sensor information comprises one or more of:
movement direction information; movement speed information; atmospheric pressure information; air temperature information; device temperature information; humidity information; gravity information; or remaining battery level information.

44. The terminal device according to claim 42 or 43, wherein the information related to the state of the terminal device comprises one or more of:
first indication information, used for indicating whether the terminal device is in an out-of-service state or in an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; or
sixth indication information, used for indicating whether the terminal device is in a universal subscriber identity module (USIM) card operating state.

45. The terminal device according to any one of claims 35 to 44, wherein the first communication module is further configured to:
receive seventh indication information; wherein the seventh indication information is used to indicate the terminal device to transmit the first data or the first information.

46. The terminal device according to claim 45, wherein the first communication module is further configured to:
receive eighth indication information in a case where the seventh indication information is used to indicate the terminal device to transmit the first data; wherein the eighth indication information is used to indicate the terminal device to transmit the second information.

47. The terminal device according to any one of claims 35 to 46, wherein the first communication module is further configured to:
transmit ninth indication information; wherein the ninth indication information is used for indicating that the terminal device has unreported first data or first information.

48. A network device, comprising:
a second communication module, configured to receive first information transmitted by a terminal device; wherein the first information comprises first data and second information associated with the first data, and the second information is used for indicating first identification information associated with a collection process of the first data, the first data comprising one or more data collection samples.

49. The network device according to claim 48, wherein the first identification information is associated with one or more of:
a configuration used by the terminal device when collecting the first data;
an operating state of the terminal device when collecting the first data; or
a precision of the first data collected by the terminal device.

50. The network device according to claim 48 or 49, wherein there is a one-to-one association relationship or a one-to-many association relationship between the second information and the data collection sample(s).

51. The network device according to any one of claims 48 to 50, wherein the second information comprises the first identification information or comprises an index for indicating the first identification information.

52. The network device according to claim 51, wherein the index is used for indicating, among one or more pieces of first identification information, the first identification information associated with the collection process of the first data; and the first information further comprises the one or more pieces of first identification information.

53. The network device according to claim 52, wherein each of the one or more pieces of first identification information is used to determine an index associated with the first identification information based on a predefined manner or a default manner.

54. The network device according to any one of claims 48 to 53, wherein the first information further comprises quantity information of data collection sample(s) associated with the first identification information.

55. The network device according to any one of claims 48 to 54, wherein each data collection sample comprised in the first data comprises one or more of:
first measurement information obtained by the terminal device by measuring a reference signal transmitted by the network device;
cell identity information associated with the first measurement information;
second measurement information obtained by the terminal device by measuring a reflected signal of a reference signal transmitted by the terminal device;
sensor information collected by the terminal device;
information related to a state of the terminal device and recorded by the terminal device;
time-related information associated with the data collection sample; or
location-related information associated with the data collection sample.

56. The network device according to claim 55, wherein the sensor information comprises one or more of:
movement direction information; movement speed information; atmospheric pressure information; air temperature information; device temperature information; humidity information; gravity information; or remaining battery level information.

57. The network device according to claim 55 or 56, wherein the information related to the state of the terminal device comprises one or more of:
first indication information, used for indicating whether the terminal device is in an out-of-service state or in an out-of-signal-coverage state;
second indication information, used for indicating whether the terminal device is in a device overheating state;
third indication information, used for indicating whether the terminal device is in a power-saving state;
power-saving state reason information;
fourth indication information, used for indicating whether the terminal device is in an interfered state;
interference source information;
fifth indication information, used for indicating whether the terminal device is in a resource-constrained state;
resource-constrained reason information; or
sixth indication information, used for indicating whether the terminal device is in a multi universal subscriber identity module (USIM) card operating state.

58. The network device according to any one of claims 48 to 57, wherein the second communication module is further configured to:
transmit seventh indication information to the terminal device; wherein the seventh indication information is used to indicate the terminal device to transmit the first data or the first information.

59. The network device according to claim 58, wherein the second communication module is further configured to:
transmit eighth indication information to the terminal device in a case where the seventh indication information is used to indicate the terminal device to transmit the first data; wherein the eighth indication information is used to indicate the terminal device to transmit the second information.

60. The network device according to any one of claims 48 to 59, wherein the second communication module is further configured to:
receive ninth indication information transmitted by the terminal device; wherein the ninth indication information is used for indicating that the terminal device has unreported first data or first information.

61. The network device according to any one of claims 48 to 60, wherein the second communication module is further configured to:
transmit the first information to a server.

62. The network device according to any one of claims 48 to 60, wherein the network device further comprises a first processing module, and the first processing module is configured to:
associate the first information with third information; wherein the third information is used for indicating second identification information associated with the collection process of the first data.

63. The network device according to claim 62, wherein the second identification information is associated with a configuration used by the network device when the terminal device collects the first data.

64. The network device according to any one of claims 48 to 63, wherein the network device further comprises:
a second processing module, configured to perform information desensitization processing on the first information collected by the terminal device, or perform information desensitization processing on first information after it is associated with third information.

65. The network device according to any one of claims 48 to 64, wherein the second communication module is further configured to:
transmit the first information collected by the terminal device to a server; or transmit first information after it is associated with third information to a server; or transmit first information after it is associated with the third information and subjected to information desensitization processing to a server; or transmit first information subjected to information desensitization processing to a server.

66. A server, comprising:
a third communication module, configured to receive first information; wherein the first information is collected by a terminal device, or is collected and subsequently associated with third information and/or subjected to information desensitization processing; wherein the first information comprises first data and second information associated with the first data, the second information is used for indicating first identification information associated with a collection process of the first data, and the first data comprises one or more data collection samples.

67. The server according to claim 66, wherein the first identification information is associated with one or more of:
a configuration used by the terminal device when collecting the first data;
an operating state of the terminal device when collecting the first data; or
a precision of the first data collected by the terminal device.

68. The server according to claim 66 or 67, wherein the third information is used for indicating second identification information associated with the collection process of the first data, and the second identification information is associated with a configuration used by a network device when the terminal device collects the first data.

69. A terminal device, comprising: a transceiver, a processor and a memory, wherein the memory is configured to store a computer program, the transceiver is configured to communicate with other devices, the processor is configured to invoke the computer program stored in the memory and execute the computer program, to enable the terminal device to perform the method according to any one of claims 1 to 13.

70. A network device, comprising: a transceiver, a processor and a memory, wherein the memory is configured to store a computer program, the transceiver is configured to communicate with other devices, and the processor is configured to invoke the computer program stored in the memory and execute the computer program, to enable the network device to perform the method according to any one of claims 14 to 31.

71. A server, comprising: a transceiver, a processor and a memory, wherein the memory is configured to store a computer program, the transceiver is configured to communicate with other devices, and the processor is configured to invoke the computer program stored in the memory and execute the computer program, to enable the server to perform the method according to any one of claims 32 to 34.

72. A chip, comprising: a processor configured to invoke a computer program from a memory and execute the computer program, to enable a device equipped with the chip to perform the method according to any one of claims 1 to 13.

73. A chip, comprising: a processor configured to invoke a computer program from a memory and execute the computer program, to enable a device equipped with the chip to perform the method according to any one of claims 14 to 31.

74. A chip, comprising: a processor configured to invoke a computer program from a memory and execute the computer program, to enable a device equipped with the chip to perform the method according to any one of claims 32 to 34.

75. A computer-readable storage medium, configured to store a computer program which, when executed by a device, enables the device to perform the method according to any one of claims 1 to 13.

76. A computer-readable storage medium, configured to store a computer program which, when executed by a device, enables the device to perform the method according to any one of claims 14 to 31.

77. A computer-readable storage medium, configured to store a computer program which, when executed by a device, enables the device to perform the method according to any one of claims 32 to 34.

78. A computer program product, comprising: computer program instructions, wherein the computer program instructions enable a computer to perform the method according to any one of claims 1 to 13.

79. A computer program product, comprising: computer program instructions, wherein the computer program instructions enable a computer to perform the method according to any one of claims 14 to 31.

80. A computer program product, comprising: computer program instructions, wherein the computer program instructions enable a computer to perform the method according to any one of claims 32 to 34.

81. A computer program, wherein the computer program enables a computer to perform the method according to any one of claims 1 to 13.

82. A computer program, wherein the computer program enables a computer to perform the method according to any one of claims 14 to 31.

83. A computer program, wherein the computer program enables a computer to perform the method according to any one of claims 32 to 34.

84. A communication system, comprising:
a terminal device, configured to perform the method according to any one of claims 1 to 13; and
a network device, configured to perform the method according to any one of claims 14 to 31.
